# EUROPÄISCHE PATENTSCHRIFT

(11) **EP 3 738 497 B1**
(45) Veröffentlichungstag und Bekanntmachung des Hinweises auf die Patenterteilung: **22.03.2023**
(21) Anmeldenummer: 20168157.4
(22) Anmeldetag: 06.04.2020
(51) Int. Cl.: A47L 15/42, D06F 34/22, G01N 13/02, D06F 33/00, A47L 15/00

(54) **VERFAHREN ZUR UNTERSUCHUNG EINER FLÜSSIGKEIT UND WASSERFÜHRENDES HAUSHALTSGERÄT**
METHOD FOR TESTING A LIQUID AND WATER-CONDUCTING DOMESTIC APPLIANCE
PROCÉDÉ D'EXAMEN D'UN APPAREIL ÉLECTROMÉNAGER D'ACHEMINEMENT DE LIQUIDE ET D'EAU

(30) Priorität: 15.05.2019 DE 102019207080
(43) Veröffentlichungstag der Anmeldung: 18.11.2020
(73) Patentinhaber: E.G.O. Elektro-Gerätebau GmbH, 75038 Oberderdingen (DE)
(72) Erfinder: Kümmerle, Hannes, 75038 Oberderdingen (DE); Münzner, Frank, 56479 Willingen (DE); Riffel, Michael, 75038 Oberderdingen (DE); Schmidt, Kay, 75038 Oberderdingen (DE)
(74) Vertreter: Patentanwälte Ruff, Wilhelm, Beier, Dauster & Partner mbB

(56) Entgegenhaltungen:
- EP-A1- 1 452 850
- EP-A2- 1 350 575
- DE-A1-102008 040 334
- DE-A1-102018 209 973

## Beschreibung

### Anwendungsgebiet und Stand der Technik

Die Erfindung betrifft ein Verfahren zur Untersuchung einer Flüssigkeit in einem wasserführenden Haushaltsgerät, wobei dabei eine Oberflächenspannung bzw. ein Tensidgehalt einer Flüssigkeit, die in dem Haushaltsgerät benutzt wird oder benutzt werden soll, erfasst werden soll. Des Weiteren betrifft die Erfindung ein entsprechend ausgebildetes wasserführendes Haushaltsgerät, insbesondere eine Spülmaschine oder eine Waschmaschine.

Für eine Vielzahl von Reinigungsvorgängen in einer Spülmaschine oder Waschmaschine ist es von Vorteil, wenn die Oberflächenspannung des Wassers erfasst werden kann, insbesondere um eine Konzentration an darin enthaltenen Tensiden von Reinigern zu bestimmen. So können ein Verschmutzungsgrad sowie eine Dosierung von Reiniger bestimmt werden.

Aus der DE 10 2006 025 622 A1 ist es bekannt, wie eine Leitfähigkeitsmessung einer in einer Waschmaschine verwendeten Flüssigkeit erfolgen kann. Daraus kann auf den Verschmutzungsgrad geschlossen werden. Ein ähnlicher Sensor ist aus der DE 10 2006 060 256 A1 bekannt.

Aus der DE 195 29 787 A1 sowie der DE 10 2005 007 870 A1 sind weitere Möglichkeiten bekannt, wie eine Oberflächenspannung von Flüssigkeiten in einer Spülmaschine oder in einer Waschmaschine erfasst werden kann.

Aus der DE 10 2008 040 334 A1 ist es bekannt, eine bestimmte Prüfkörperanordnung in einer Geschirrspülmaschine vorzusehen, die mit Spülflüssigkeit benetzt wird. Daran bildet sich ein Tropfen, der hängenbleiben kann oder herabfallen kann. Daraus wird eine Oberflächenspannung der Spülflüssigkeit bestimmt.

Aus der EP 1 452 850 A1 ist ein Verfahren zur Bestimmung einer Oberflächenspannung einer Flüssigkeit nach der Blasendruckmethode bekannt. Mittels einer Kapillare wird ein gasförmiger Volumenstrom in eine zu messende Flüssigkeit eingebracht. Mittels eines Drucksensors wird ein zeitabhängiger Druckverlauf des Volumenstroms des Gases während einer Blasenbildung ermittelt, und anhand dessen kann auf die Oberflächenspannung der Flüssigkeit geschlossen werden.

### Aufgabe und Lösung

Der Erfindung liegt die Aufgabe zugrunde, ein eingangs genanntes Verfahren sowie ein eingangs genanntes wasserführendes Haushaltsgerät zu schaffen, mit denen Probleme des Standes der Technik gelöst werden können und es insbesondere möglich ist, eine Oberflächenspannung einer Flüssigkeit in einem solchen Gerät einfach, zuverlässig und schnell zu messen.

Gelöst wird diese Aufgabe durch ein Verfahren mit den Merkmalen des Anspruchs 1 sowie durch ein wasserführendes Haushaltsgerät mit den Merkmalen des Anspruchs 15. Vorteilhafte sowie bevorzugte Ausgestaltungen der Erfindung sind Gegenstand der weiteren Ansprüche und werden im Folgenden näher erläutert. Dabei werden manche der Merkmale nur für das Verfahren oder nur für das Haushaltsgerät beschrieben. Sie sollen jedoch unabhängig davon sowohl für das Verfahren als auch für das Haushaltsgerät selbständig und unabhängig voneinander gelten können. Der Wortlaut der Ansprüche wird durch ausdrückliche Bezugnahme zum Inhalt der Beschreibung gemacht.

Es ist vorgesehen, dass das Verfahren zum Erfassen einer Oberflächenspannung einer Flüssigkeit bei einer Untersuchung die im Folgenden genannten Schritte aufweist. Zuerst wird ein flacher und flächiger Träger bereitgestellt bzw. ist in einer entsprechenden Vorrichtung eines Haushaltsgeräts oder in dem Haushaltsgerät vorgesehen. Der Träger weist eine flache und flächige Trägeroberfläche auf. Vorteilhaft ist die Trägeroberfläche plan, also eben, sie kann aber auch leicht gewölbt sein bzw. leicht gebogen sein. Auf der Trägeroberfläche sind abwechselnd Hydrophob-Bereiche und Hydrophil-Bereiche vorgesehen. Diese definieren sich dadurch, dass die Hydrophil-Bereiche hydrophil sind und Wasser eher anziehen bzw. Wasser sich leicht darauf ablagern kann. Die Hydrophob-Bereiche sind das Gegenteil davon, sie sind hydrophob und stoßen Wasser eher ab. In Ausgestaltung der Erfindung ist vorteilhaft die Adhäsionskraft der Hydrophob-Bereiche und der Hydrophil-Bereiche unterschiedlich, wobei besonders vorteilhaft eine Differenz der jeweiligen Adhäsionskraft mindestens 40 mN/m beträgt, insbesondere mindestens 100 mN/m. Dabei können bevorzugt die Hydrophob-Bereiche und die Hydrophil-Bereiche direkt aneinanderstoßen, also ohne dazwischenliegende Bereiche, Übergänge odgl..

In einem nächsten Schritt wird die zu untersuchende Flüssigkeit auf die Trägeroberfläche aufgebracht. Dies kann in einem bewussten Schritt erfolgen, beispielsweise entweder durch gezieltes Pumpen oder indem die Trägeroberfläche während eines Betriebs des Haushaltsgeräts mit Flüssigkeit automatisch benetzt bzw. bespritzt wird. Anschließend wird die Flüssigkeit, die auf der Trägeroberfläche ist, einer Krafteinwirkung ausgesetzt bzw. eine Kraft kann aufgebracht oder sozusagen gestartet werden. Diese Krafteinwirkung ist derart bzw. dazu ausgebildet, dass sie versucht, die Flüssigkeit von der Trägeroberfläche zumindest teilweise zu entfernen bzw. dass sie allgemein versucht, die Flüssigkeit von der Trägeroberfläche wegzubewegen. Dabei muss bzw. sollte nicht zwingend die gesamte Flüssigkeit entfernt werden. Vorteilhaft wird mindestens ein Teil der Flüssigkeit auf der Trägeroberfläche belassen, indem die Krafteinwirkung entsprechend ausgestaltet ist hinsichtlich Richtung, Stärke bzw. Intensität und/oder Dauer ihrer Einwirkung. Danach wird erfasst, ob sich noch Flüssigkeit auf der Trägeroberfläche befindet bzw. welche Menge an Flüssigkeit noch auf der Trägeroberfläche verblieben ist, ggf. welche Fläche noch von Flüssigkeit bedeckt ist. Dies wird dann als Maß für die Oberflächenspannung bzw. den Tensidgehalt der untersuchten Flüssigkeit herangezogen. Je weniger Flüssigkeit auf der Trägeroberfläche verbleibt, als desto größer wird die Oberflächenspannung der Flüssigkeit angenommen bzw. bestimmt. Je mehr Flüssigkeit auf der Trägeroberfläche verbleibt, als desto geringer wird die Oberflächenspannung der Flüssigkeit angenommen bzw. bestimmt.

Dies liegt daran, dass erfindungsgemäß genutzt wird, dass sich durch die Differenz der Adhäsionskraft für Wasser auf der Trägeroberfläche durch die Hydrophob-Bereiche und die Hydrophil-Bereiche das Wasser bei geringer Oberflächenspannung der Flüssigkeit gut verteilt und möglicherweise noch auf den Hydrophob-Bereichen verbleibt. Somit kann zumindest hier trotz der Krafteinwirkung ein sehr dünner Flüssigkeitsfilm verbleiben, insgesamt also relativ viel Flüssigkeit verbleiben. Ist die Oberflächenspannung der Flüssigkeit dagegen relativ groß oder sehr groß, so zieht sich auch die Flüssigkeit von den Hydrophob-Bereichen zurück auf die Hydrophil-Bereiche und kann dann die Hydrophob-Bereiche nicht mehr überbrücken. Durch die abwechselnde Anordnung mehrerer Hydrophob-Bereiche und Hydrophil-Bereiche kann erreicht werden, dass sich insgesamt bewirken lässt, dass eine Flüssigkeit mit großer Oberflächenspannung, beispielsweise Frischwasser, nur in geringer Menge oder gar nicht auf der Trägeroberfläche verbleibt. Ist die Oberflächenspannung dagegen gering, beispielsweise weil im Betrieb des Haushaltsgeräts viel Reiniger bzw. Tensid zugegeben worden ist, so kann ein Großteil oder die gesamte Trägeroberfläche mit der Flüssigkeit benetzt bleiben. Dies ist dann eben ein Anzeichen bzw. ein Maß für die vorhandene geringe Oberflächenspannung der Flüssigkeit. Anhand der verbliebenen Menge an Flüssigkeit auf der Trägeroberfläche kann dann, wie vorbeschrieben, die Oberflächenspannung der Flüssigkeit zumindest relativ erfasst werden. Durch Vergleich mit abgespeicherten Werten für die verbliebene Menge an Flüssigkeit kann dann qualitativ oder auch quantitativ die Oberflächenspannung der Flüssigkeit erfasst und bestimmt werden.

In vorteilhafter Ausgestaltung der Erfindung können die Hydrophob-Bereiche und die Hydrophil-Bereiche ein regelmäßiges Muster in einer Richtung bzw. entlang einer Richtung auf der Trägeroberfläche bilden. So können also in dieser Richtung mehrere Hydrophob-Bereiche und Hydrophil-Bereiche abwechselnd angeordnet sein, beispielsweise dreimal ein Wechsel zwischen einem Hydrophob-Bereich und einem Hydrophil-Bereich bzw. anders herum vorgesehen sein. Es können also beispielsweise vorteilhaft in dieser Richtung zwei Hydrophob-Bereiche und zwei Hydrophil-Bereiche vorgesehen sein, möglicherweise auch jeweils drei oder vier.

Um eine größere wirksame Trägeroberfläche zu schaffen, auf der Flüssigkeit verbleiben kann, kann vorgesehen sein, dass auch in einer zweiten Richtung, die rechtwinklig zur vorgenannten Richtung auf der Trägeroberfläche verläuft, Hydrophob-Bereiche und Hydrophil-Bereiche abwechselnd vorgesehen sind bzw. ein regelmäßiges Muster bilden. Auch hier kann mindestens zweimal oder dreimal ein Wechsel zwischen einem Hydrophob-Bereich und einem Hydrophil-Bereich vorgesehen sein, vorteilhaft noch mehr. Besonders vorteilhaft können in einer Richtung erheblich mehr Hydrophob-Bereiche und Hydrophil-Bereiche abwechselnd vorgesehen sein als in einer anderen Richtung rechtwinklig dazu. Hier kann der Träger bevorzugt länglich, besonders bevorzugt rechteckig, ausgebildet sein.

Von Vorteil ist es, wenn alle Hydrophob-Bereiche jeweils gleich groß ausgebildet sind. Zusätzlich oder alternativ können auch alle Hydrophil-Bereiche jeweils gleich groß ausgebildet sein. So können gleichmäßige Verhältnisse geschaffen werden. Besonders vorteilhaft sind alle Hydrophob-Bereiche und/oder alle Hydrophil-Bereiche jeweils identisch ausgebildet, also mit gleicher Fläche und gleicher Form, insbesondere allesamt identisch.

In Ausgestaltung der Erfindung können die Hydrophob-Bereiche und die Hydrophil-Bereiche jeweils rechteckig ausgebildet sein. So kann es ermöglicht werden, dass die Bereiche jeweils in den Ecken direkt aneinanderstoßen, also zwischen benachbarten Bereichen mit unterschiedlicher Adhäsionskraft ihrer Oberfläche keine Zwischenbereiche vorgesehen sind. So können die Bereiche eine Trägeroberfläche vollständig bedecken. Eine besonders vorteilhafte Ausgestaltung sieht vor, dass die Bereiche jeweils quadratisch sind.

Von der Größe her bietet es sich an, die Bereiche mit einer Größe im Millimeter-Bereich auszugestalten. So können eine Länge und/oder eine Breite der jeweiligen Bereiche zwischen 1 mm und 5 mm liegen, vorteilhaft zwischen 2 mm und 4 mm. Dann können auf einer Trägeroberfläche mit den Abmessungen zwischen 10 mm und 15 mm Breite sowie zwischen 20 mm und 40 mm Länge jeweils zwei bis drei Bereiche jeder Art in der Richtung der Breite und fünf bis zehn Bereiche jeder Art in der Länge der Trägeroberfläche vorgesehen sein bei der vorgenannten möglichen Größe für die Bereiche. Bei einer derartigen Große lässt sich ein erfindungsgemäßer Träger noch gut herstellen mit ausreichender erforderlicher Genauigkeit ohne allzu großen Aufwand. Des Weiteren lässt er sich auch gut in ein wasserführendes Haushaltsgerät integrieren, um dort praxistauglich die Erfassung durchführen zu können.

Für die Krafteinwirkung kann vorteilhaft vorgesehen sein, dass sie eine bestimmte Richtung aufweist bzw. eine gerichtete Krafteinwirkung ist. Es kann vorgesehen sein, dass entlang der genannten Richtung der Krafteinwirkung mehr Hydrophob-Bereiche und Hydrophil-Bereiche vorgesehen sind als in einer Richtung rechtwinklig dazu. So kann durch die gerichtete Krafteinwirkung die Flüssigkeit entlang einer möglichst großen Strecke über die abwechselnden Bereiche mit unterschiedlicher Adhäsionskraft bewegt werden, was eine besonders gute und differenzierte Aussage über die Oberflächenspannung der Flüssigkeit ermöglicht. Deswegen ist die Trägeroberfläche eben in Richtung entlang der Kraftwirkung vorteilhaft länger als in der anderen Richtung rechtwinklig dazu, vorzugsweise zweimal so lang bis zu zehnmal so lang.

In vorteilhafter Ausgestaltung der Erfindung können die Hydrophob-Bereiche und/oder die Hydrophil-Bereiche entlang der Richtung der Krafteinwirkung bzw. in der Richtung, in der sich die Flüssigkeit durch die Krafteinwirkung bewegt bei ihrem Entfernen, dieselbe Ausdehnung aufweisen wie in einer Richtung rechtwinklig dazu. Wie zuvor ausgeführt worden ist, sind vorteilhaft die Bereiche jeweils quadratisch ausgebildet, dann ist diese Bedingung leicht erfüllbar.

In einer ersten Ausgestaltung der Erfindung kann die Krafteinwirkung ein Luftstrom sein, beispielsweise durch ein Gebläse hervorgerufen werden. Dies kann ein separates Gebläse eigens für diese Krafteinwirkung sein, alternativ kann ein ohnehin in dem Haushaltsgerät hergestellter bzw. bestehender Luftstrom oder ein entsprechendes Gebläse hierfür genutzt werden. Ein solcher Luftstrom kann sehr gleichmäßig auf die auf der Trägeroberfläche befindliche Flüssigkeit einwirken, beispielsweise weil er schräg darauf gerichtet ist und somit eigentlich die gleiche Auswirkung auf sämtliche auf der Trägeroberfläche befindliche Flüssigkeit hat.

In alternativer Ausgestaltung der Erfindung kann die Krafteinwirkung durch die Schwerkraft gebildet werden bzw. kann die Schwerkraft für die Krafteinwirkung genutzt werden. Diese Schwerkraft ist ja ohnehin vorhanden. Hierfür kann der Träger mit seiner Trägeroberfläche schräggestellt werden in einem Winkel zwischen 10° und 80° zur Horizontalen. Vorteilhaft bleibt der Träger stets in einem bestimmten Winkel angeordnet, auch wenn er grundsätzlich verstellbar sein könnte, um die Krafteinwirkung verändern zu können bzw. variabel zu machen. Ein vorteilhafter Winkel für die Krafteinwirkung auf den Träger bzw. auf Flüssigkeit, die sich auf der Trägeroberfläche befindet, liegt besonders vorteilhaft zwischen 30° und 60°. Der Vorteil der Verwendung der Schwerkraft liegt erkennbar darin, dass keine separate Krafterzeugung notwendig ist. Des Weiteren ist die Schwerkraft sehr beständig und gleichzeitig auch weltweit gleich bzw. ausreichend gleich. Alternativ kann der Träger gedreht werden, so dass die von der Drehgeschwindigkeit abhängige Fliehkraft diejenige Kraft ist, die die Flüssigkeit von der Trägeroberfläche zu entfernen versucht. Sie kann auch durch die Drehgeschwindigkeit variiert werden.

Bezüglich des vorgenannten zeitlichen Aspekts der Erfassung der verbleibenden Menge an Flüssigkeit auf der Trägeroberfläche wird es als vorteilhaft angesehen, wenn die Erfassung einige Sekunden gewartet wird nach Aufbringen der Flüssigkeit auf die Trägeroberfläche bzw. nach Beginn der Krafteinwirkung. Vorteilhaft sind dies 2 sec bis 20 sec, besonders vorteilhaft 5 sec bis 10 sec. Somit kann ohnehin überschüssige Flüssigkeit von der Trägeroberfläche abfließen, die sich unabhängig von der jeweils vorhandenen Oberflächenspannung der Flüssigkeit nicht halten könnte. Des Weiteren kann für diese Zeit die Krafteinwirkung sozusagen wirken bzw. ihre Wirkung entfalten. Dadurch ist es möglich, dass sozusagen immer gleiche Verhältnisse aufgrund der Krafteinwirkung nach dieser Zeit von wenigen Sekunden vorherrschen, so dass die Messungen vergleichbar sind und einen guten Rückschluss auf die tatsächliche Oberflächenspannung der Flüssigkeit ermöglichen.

Zur Erfassung der Menge der auf der Trägeroberfläche gegebenenfalls verbleibenden Flüssigkeit gibt es mehrere Möglichkeiten. Gemäß einer ersten Möglichkeit wird die Menge kapazitiv erfasst. Dazu können vorteilhaft am Träger angebrachte elektrisch leitfähige Elektroden vorgesehen sein, wobei deren Kapazität untereinander bzw. eine kapazitive Kopplung zwischen den Elektroden, vorzugsweise zwei Elektroden, gemessen wird. Dabei können die Elektroden so angeordnet sein, dass eben die Kapazität zwischen ihnen bzw. die kapazitive Kopplung zwischen ihnen von der Menge an Flüssigkeit auf der Trägeroberfläche abhängt bzw. in einem bestimmten Verhältnis dazu steht. Dazu sollten die beiden Elektroden einen gewissen Abstand voneinander aufweisen, der vorteilhaft nicht zu groß ist, beispielsweise maximal 2 mm. In vorteilhafter Ausgestaltung der Erfindung können die Elektroden fingerartig bzw. schmal und länglich ausgebildet sein. Dabei können sie sozusagen ineinander verschränkt sein, beispielsweise wie zwei ineinander ragende Kämme. So wird zum einen besonders viel Fläche erreicht, an denen die beiden Elektroden einen geringen Abstand zueinander aufweisen, da hier die kapazitive Kopplung zwischen ihnen gegeben ist, welche durch die Menge an vorhandener Flüssigkeit beeinflussbar ist. Zum anderen kann dieser Bereich der nahe beieinanderliegenden Anordnung vorteilhaft möglichst weitgehend über die Trägeroberfläche verteilt sein, wo eben Flüssigkeit vorhanden sein kann, so dass sich die gegebenenfalls vorhandene Menge an Flüssigkeit besonders gut auswirken kann. Dies wiederum kann eben an den beiden Elektroden durch Kapazitätsmessung erfasst werden. Vorteilhaft verlaufen die Elektroden dabei entlang von gegenüberliegenden längeren Längsseiten der Trägeroberfläche, wobei fingerartige längliche schmale Abschnitte davon rechtwinklig abstehen bzw. zur gegenüberliegenden Elektrode hin verlaufen.

Gemäß einer zweiten Möglichkeit kann die Menge der ggf. auf der Trägeroberfläche verbleibenden Flüssigkeit optisch erfasst werden. Hierfür kann eine Transmissions-Messung, eine Messung der Lichtbrechung oder eine Messung der Reflexion verwendet werden. Dabei kann ausgenutzt werden, dass sich die jeweiligen Eigenschaften der Transmission, der Lichtbrechung oder vor allem der Reflexion der Trägeroberfläche ändern, abhängig davon ob und ggf. wie viel Flüssigkeit darauf vorhanden ist. So kann beispielsweise die Trägeroberfläche an sich matt sein bzw. eine geringe Reflexion aufweisen. Befindet sich Flüssigkeit darauf, so kann diese bekanntermaßen deutlich besser reflektierend ausgebildet sein, was eben bei einer Messung der Reflexion, vorteilhaft mit einer breit streuenden Lichtquelle und einem Lichtempfänger, festgestellt werden kann.

Eine weitere dritte Möglichkeit zur Erfassung der gegebenenfalls auf der Trägeroberfläche verbleibenden Menge an Flüssigkeit kann eine Gewichtsmessung bzw. eine Messung der Gewichtskraft sein, die vom Träger ausgeübt wird. Hierfür kann der Träger an einem entsprechenden Gewichtssensor angeordnet sein, vorzugsweise daran aufgehängt oder darauf aufliegend.

In vorteilhafter Ausgestaltung der Erfindung ist die Trägeroberfläche derart nahe an einer Wasserführung und/oder Behandlungskammer des wasserführenden Haushaltsgeräts angeordnet, dass das Aufbringen von Flüssigkeit auf die Trägeroberfläche während des regulären Betriebs des Haushaltsgeräts sehr einfach möglich ist, vorteilhaft automatisch erfolgt. So kann der Träger bzw. die Trägeroberfläche beispielsweise in einem Behandlungsraum des Haushaltsgeräts angeordnet sein oder vorteilhaft seitlich an einer Wandung davon. Möglicherweise kann hier eine Klappe oder sonstige Ventileinrichtung zu dem Behandlungsraum oder zu der Wasserführung vorgesehen sein, durch deren jeweilige Betätigung tatsächlich eine genau gezielte Aufbringung von Flüssigkeit auf den Träger möglich ist. Falls dieser Aufwand eingespart werden soll, ist es auch möglich, wenn der Träger einfach offen in einer Seitenwand der Behandlungskammer angeordnet ist und dann, beispielsweise in einer Spülmaschine, regelmäßig mit Flüssigkeit bzw. Wasser bespritzt wird. Dies kann beispielsweise durch jeweils umlaufende Spülarme mit zeitlichem Abstand von wenigen Sekunden erfolgen.

Gemäß einer vorteilhaften Weiterbildung der Erfindung kann vorgesehen sein, dass der Träger beheizbar ist bzw. beheizt wird. Hierfür kann an dem Träger eine Heizeinrichtung vorgesehen sein, vorteilhaft an einer von der Trägeroberfläche abgewandten Seite des Trägers, also an einer Trägerunterseite. Eine Heizeinrichtung kann vorteilhaft eine Dickschichtheizung oder eine andere flächig verteilte Heizung sein, beispielsweise mit mäanderförmigem Verlauf für eine möglichst gleichmäßige Beheizung der Trägeroberfläche bzw. des Trägers. Hierbei kann genutzt werden, dass die Temperatur ebenfalls eine Auswirkung auf die Oberflächenspannung der Flüssigkeit aufweist. Es kann also mit Variation der Temperatur der Trägeroberfläche und somit auch der gegebenenfalls darauf befindlichen Flüssigkeit noch genauer deren Oberflächenspannung bzw. Tensidgehalt bestimmt werden. So nimmt üblicherweise die Oberflächenspannung mit zunehmender Temperatur ab. Zwischen Flüssigkeiten mit 20°C und mit 60°C nimmt die Oberflächenspannung in der Regel etwa 20 % ab, was einen gut messbaren Effekt gibt.

In weiterer Ausgestaltung der Erfindung kann eine Temperatur des Trägers bzw. der Trägeroberfläche und/oder der Flüssigkeit auf dem Träger bestimmt werden. So kann eben auch die Temperaturabhängigkeit der Oberflächenspannung der Flüssigkeit erfasst werden. Dazu kann vorteilhaft ein Temperatursensor direkt auf dem Träger aufgebracht sein, vorzugsweise auf der Trägeroberfläche, um möglichst gut nicht nur deren Temperatur, sondern auch diejenige der darauf befindlichen Flüssigkeit erfasst werden. Aus der Temperatur der vorhandenen Flüssigkeit sowie deren Menge kann dann die Oberflächenspannung bestimmt werden. Des Weiteren ist es insbesondere mit einer vorgenannten Heizeinrichtung am Träger möglich, dass unabhängig von der Temperatur im Behandlungsraum bzw. der Flüssigkeit an sich stets dieselben Temperaturbedingungen auf der Trägeroberfläche eingestellt werden, damit konstant und möglichst genau gemessen werden kann.

in einer vorteilhaften Ausgestaltung der Erfindung unterscheiden sich die Hydrophob-Bereiche und die Hydrophil-Bereiche durch das Material ihrer Oberfläche. So kann mindestens einer der Bereiche eine Beschichtung aufweisen, vorteilhaft der Hydrophob-Bereich. Eine solche Beschichtung kann aus der Gruppe DLC-Beschichtung, Parylen, PTFE oder Nano-Beschichtung mit Lotoseffekt ausgewählt werden. Diese Beschichtung kann dann im Muster der Hydrophob-Bereiche aufgebracht werden. Kunststoff-Beschichtungen haben sich als relativ einfach herstellbar herausgestellt, insbesondere als Kunststoffbedampfung. Alternativ kann ein Siebdruckverfahren verwendet werden, oder aus einer vollflächigen Beschichtung kann das Muster herausgearbeitet werden.

In alternativer Ausgestaltung der Erfindung unterscheiden sich die Hydrophob-Bereiche und die Hydrophil-Bereiche hinsichtlich einer Oberflächenstruktur voneinander. Dazu können die Hydrophil-Bereiche eine größere Oberflächenrauheit aufweisen als die Hydrophob-Bereiche, so dass Flüssigkeit darauf eben leichter bzw. besser verbleiben kann. Eine solche unterschiedliche Oberflächenrauheit kann durch eine partielle Oberflächenstrukturierung erreicht werden. Möglichkeiten hierfür sind Siebdruck, partielles bzw. maskiertes Sandstrahlen oder sonstiges Strahlen, partielles Polieren, maskiertes Ätzen oder Lasern, beispielsweise als sogenanntes Laser-Scribing. Selbst in den vorgenannten relativ kleinen Abmessungen können somit die gewünschten unterschiedlichen Oberflächenrauheiten hergestellt werden. Alternativ kann auch die Oberflächenrauheit verringert werden durch jeweiliges feines Polieren.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: eine Draufsicht auf einen erfindungsgemäßen Träger mit einem Messbereich, in dem Hydrophob-Bereiche und Hydrophil-Bereiche in regelmäßigem Muster abwechselnd angeordnet sind,
- Fig. 2: eine Ansicht einer Schicht unterhalb des Messbereichs mit zwei fingerartig ineinandergreifenden Elektroden zur kapazitiven Erfassung einer Menge an Flüssigkeit darüber,
- Fig. 3: eine Darstellung von vorhandener Flüssigkeit im Messbereich, nachdem Frischwasser ohne Tenside aufgebracht wurde und eine Zeit lang ablaufen konnte,
- Fig. 4: eine Darstellung ähnlich Fig. 3, nachdem Wasser mit relativ geringem Tensid-Gehalt aufgebracht worden ist,
- Fig. 5: eine Darstellung ähnlich Fig. 3, nachdem Wasser mit mittlerem Tensid-Gehalt aufgebracht worden ist,
- Fig. 6: eine Darstellung ähnlich Fig. 3, nachdem Wasser mit relativ hohem Tensid-Gehalt aufgebracht worden ist,
- Fig. 7: eine Darstellung ähnlich Fig. 3, nachdem nach kurzem Abspülen der Trägeroberfläche Frischwasser ohne Tenside aufgebracht worden ist,
- Fig. 8: eine Darstellung ähnlich Fig. 3, nachdem nach langem Abspülen der Trägeroberfläche Frischwasser aufgebracht worden ist und davon dann nur kleine Tropfen zurückbleiben,
- Fig. 9: eine Abwandlung eines Trägers ähnlich Fig. 1 mit einer viermal so großen Anzahl von Hydrophob-Bereichen und Hydrophil-Bereichen in einem regelmäßigen Muster,
- Fig. 10: eine Vorderansicht einer erfindungsgemäßen Vorrichtung mit einem erfindungsgemäßen Träger daran, der in einem bestimmten Winkel schräggestellt ist,
- Fig. 11: eine Seitenansicht der Vorrichtung aus Fig. 10 mit dem schräggestellten Träger und
- Fig. 12: eine erfindungsgemäße Spülmaschine als wasserführendes Haushaltsgerät mit einer Spülkammer, in deren Seitenwand die Vorrichtung aus Fig. 10 angeordnet ist derart, dass der Träger von Spülwasser automatisch benetzt wird.

### Detaillierte Beschreibung der Ausführungsbeispiele

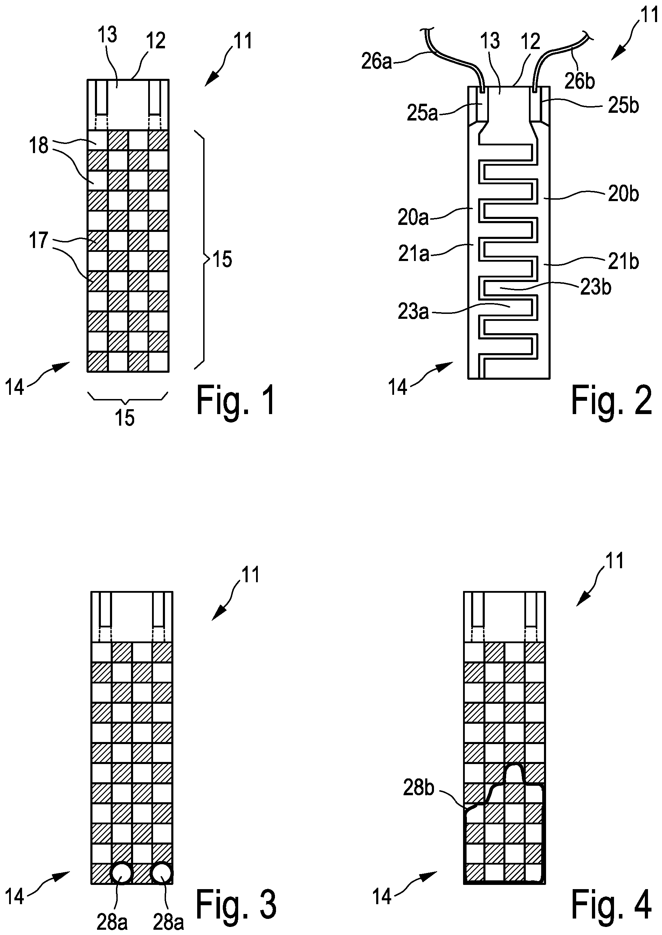

In der Fig. 1 ist ein erfindungsgemäßer Träger 11 in rechteckiger Form dargestellt in Draufsicht. Er weist ein Trägersubstrat 12 auf, vorteilhaft aus Kunststoff oder aus Keramik mit einer Trägeroberfläche 13. Der Träger 11 kann beispielsweise zwischen 0,5 cm und 2 cm breit sein und zwischen 3 cm und 8 cm lang sein. Der Träger 11 weist einen unteren Endbereich 14 auf. Von diesem ausgehend nach oben erstreckt sich ein Messbereich 15, so dass die Trägeroberfläche 13 mit etwa 80 % der Länge des Trägers 11 vom Messbereich 15 bedeckt wird, der obere Rest bleibt frei.

In diesem Messbereich 15 sind quadratische Hydrophob-Bereiche 17, hier durch dunkle Schraffierung veranschaulicht, und ebenfalls quadratische und gleich groß ausgebildete Hydrophil-Bereiche 18 im Wechsel angeordnet. Sie bilden erkennbar eine Art Schachbrettmuster und bedecken in regelmäßiger Anordnung den Messbereich 15. Jeweils zwei Hydrophob-Bereiche 17 und zwei Hydrophil-Bereiche 18 sind abwechselnd nebeneinander vorgesehen. Jeweils sechs Hydrophob-Bereiche 17 und Hydrophil-Bereiche 18 sind untereinander abwechselnd angeordnet. Die Bereiche 17 und 18 grenzen hier auch direkt aneinander an. Die Bereiche 17 und 18 weisen, wie eingangs erläutert worden ist, eine deutlich unterschiedliche Adhäsionskraft auf, um Wasser abzuweisen oder eben zu halten. Diese Differenz kann mindestens 100 mN/m betragen, für die Hydrophob-Bereiche also deutlich geringer sein. Die Hydrophob-Bereiche können beispielsweise durch eine eingangs genannte Nano-Beschichtung mit Lotoseffekt gebildet sein. Entweder können diese partiell aufgebracht werden, beispielsweise durch Siebdruck. Alternativ können der gesamte Messbereich 15 oder sogar die gesamte Trägeroberfläche 13 damit beschichtet werden, und dann wird bis auf die Hydrophob-Bereiche 17 diese Beschichtung wieder abgetragen, beispielsweise durch Laser-Bestrahlung bzw. Laser-Scribing, was relativ genau möglich ist.

in Fig. 2 ist dargestellt, dass noch unterhalb der Hydrophob-Bereiche 17 und der Hydrophil-Bereiche 18 auf die Trägeroberfläche 13, vorzugsweise direkt auf die Oberfläche des Trägersubstrats 12, zwei Elektroden 20a und 20b als eingangs genannte Erfassungsmittel aufgebracht sind. Die Elektroden 20a und 20b weisen erkennbar jeweils einen entlang der längeren Längsseite verlaufenden Basisabschnitt 21a und 21b auf, von dem jeweils abwechselnd in Richtung zur gegenüberliegenden Längsseite längliche Fingerabschnitte 23a und 23b abstehen. Diese Fingerabschnitte 23a und 23b verschränken sich sozusagen ineinander. Es sind jeweils sechs dieser länglichen Fingerabschnitte 23a und 23b vorgesehen, so dass die jeweilige Fläche der Elektroden 20a und 20b genau gleich groß ist. Der Abstand der beiden Elektroden 20a und 20b zueinander ist auch jeweils gleich, insbesondere sehr gering, er kann zwischen 0,1 mm und 1 mm liegen. Die Elektroden 20a und 20b können durch Beschichten der Trägeroberfläche 13 mit entsprechend leitfähigem Material ausgebildet werden, beispielsweise carbonhaltig oder durch eine Kupferlegierung. Dazu muss die Trägeroberfläche 13 natürlich elektrisch isolierend sein, was aber bei den eingangs genannten Materialien kein Problem ist. Vorteilhaft wird auf die Elektroden 20a und 20b noch eine Deckschicht aufgebracht, insbesondere um sie elektrisch zu isolieren und auch um die Oberfläche möglichst glatt und eben zu machen für die nachfolgende Aufbringung der Hydrophob-Bereiche 17 und der Hydrophil-Bereiche 18. Nach oben hin gehen die beiden Elektroden 20a und 20b in jeweils einen Anschlusskontakt 25a und 25b über. Hieran können sie elektrisch kontaktiert werden, vorteilhaft wie schematisch dargestellt jeweils mit einer Anschlussleitung 26a und 26b. Diese können aufgelötet werden, alternativ mit einer Art übergreifendem Steckanschluss kontaktiert werden, wie dies an sich dem Fachmann bekannt ist.

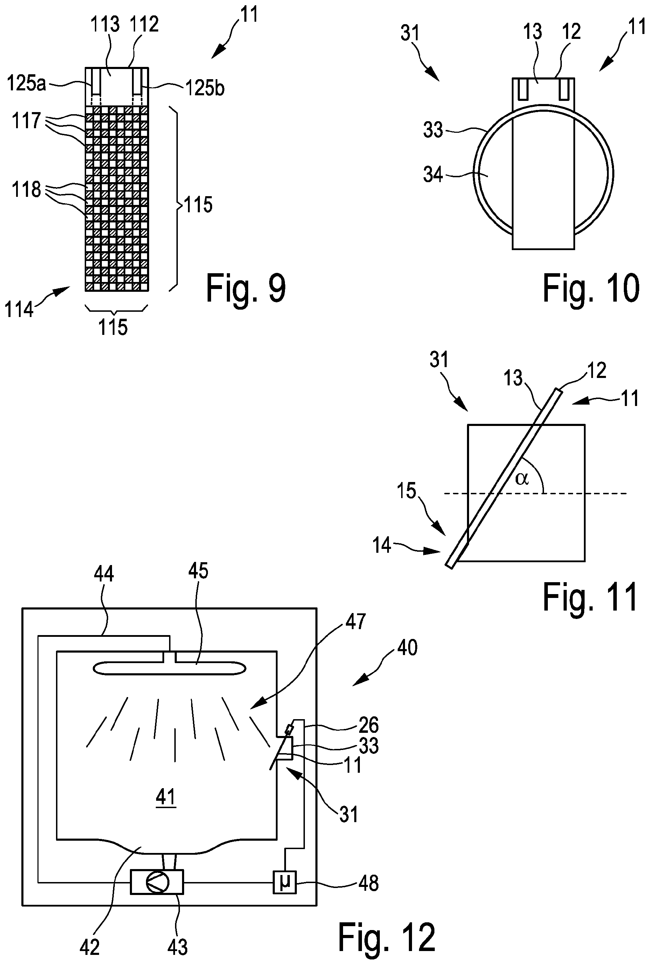

Aus dem Vergleich der Fig. 1 und 2 ist zu ersehen, dass der oberste Fingerabschnitt 23a so hoch reicht wie der Messbereich 15, so dass der Messbereich 15 von den Elektroden mit ihren Fingerabschnitten bedeckt wird und somit abgemessen werden kann. Die Elektroden 20 und die Bereiche 17 und 18 überdecken sich also. Wie aus dem Stand der Technik bekannt ist, kann durch Kapazitätsmessung an den Elektroden, die eingangs erläutert worden ist, eine Menge an auf dem Träger 11 befindlicher Flüssigkeit bestimmt werden. Diese Flüssigkeit wird sich in dem hier dargestellten Ausführungsbeispiel einer Vorrichtung gemäß den Fig. 10 bis 12 vor allem im unteren Endbereich 14 sammeln bzw. von dort beginnend möglicherweise nach oben erstrecken. Die Elektroden 20a und 20b können nicht den genauen Ort der Flüssigkeit bestimmen. Dies wäre zwar möglich, indem mehrere übereinander angeordnete Bereiche mit je zwei solchen Elektroden vorgesehen werden. Da der Träger 11 aber schräg stehend angeordnet ist, und der untere Endbereich 14 unten angeordnet ist, wird sich vorhandene Flüssigkeit dort sammeln. Wie aus den nachfolgend erläuterten Fig. 3 bis 8 ersichtlich ist, reicht es also, ausschließlich die Menge an Flüssigkeit zu bestimmen, losgelöst von ihrem Ort.

in Fig. 3 ist dargestellt, wie auf den Träger 11, der schräg steht, wie es die Fig. 11 zeigt, Frischwasser als Flüssigkeit aufgebracht worden ist. Es stammt direkt aus einer Wasserleitung und enthält keinerlei Reiniger bzw. Tensid. Seine Oberflächenspannung ist also relativ groß bzw. bei einem Verwendungsfall in einer Spülmaschine quasi maximal. Es zeigt sich, dass nach der vorgenannten Zeit zwischen 2 sec und 5 sec, vorteilhaft etwa 3 sec, zwei kleine Tropfen 28a im unteren Endbereich 14 verbleiben, obwohl der gesamte Träger 11 bzw. zumindest der Messbereich 15 mit dem Frischwasser benetzt worden ist. Dies bedeutet also, dass aufgrund der Schwerkraft durch die Schrägstellung des Trägers 11 gemäß Fig. 11 die Flüssigkeit von den oberen Bereichen des Messbereichs 15 nach unten abfließt, da sie von den Hydrophob-Bereichen 17 zu stark abgestoßen wird bzw. sich dort nicht halten kann. Aufgrund ihrer relativ hohen Oberflächenspannung läuft sie einfach ab, so dass sich die beiden kleinen Tropfen 28a nur ganz unten auf den beiden untersten Hydrophil-Bereichen 18 halten können. Möglicherweise halten sie sich auch nur deswegen dort, weil darunter die untere Kante des Trägers 11 ist und sie hier wiederum aufgrund ihrer Oberflächenspannung gehalten werden.

Mittels der beiden Elektroden 20a und 20b kann diese sehr geringe Menge an Flüssigkeit erfasst werden, weil sie die Kapazität bzw. die kapazitive Kopplung zwischen den beiden Elektroden an deren jeweils untersten Fingern 23a und 23b kaum erhöht. Dies ergibt die kapazitive Messung.

Wird nun gemäß Fig. 4 Frischwasser mit einer relativ geringen Dosierung von Reiniger bzw. mit relativ geringem Tensidgehalt aufgebracht, das also eine geringere Oberflächenspannung aufweist als das Frischwasser, aber immer noch eine relativ hohe Oberflächenspannung, und kann dann für eine Zeit von etwa 3 sec bei der Schrägstellung des Trägers 11 ablaufen, so verbleibt ein relativ kleiner Feuchtbereich 28b. Dieser erstreckt sich vom unteren Endbereich 14 nach oben und wird dort etwas schmaler aufgrund der jeweiligen Anordnung der Hydrophil-Bereiche 18. Die Flüssigkeit beginnt also natürlich von oben nach unten zu fließen und unten abzulaufen entsprechend der Krafteinwirkung. Ähnlich wäre es bei einem Luftstrom oder einem Drehen des Trägers wie zuvor beschrieben.

Es ist deutlich erkennbar, dass nun die kapazitive Kopplung zwischen den Elektroden im Vergleich zu derjenigen der Fig. 3 deutlich geändert ist, nämlich erhöht ist. Dies kann auch entsprechend erfasst werden, zumindest als relativer Unterschied zur vorgenannten Messung.

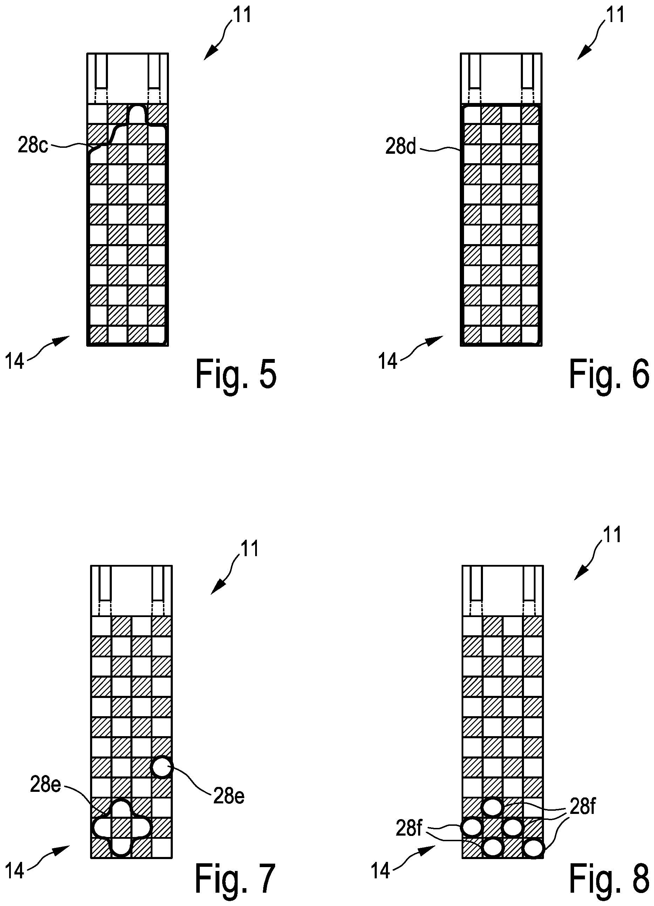

Gemäß Fig. 5 ist Frischwasser mit einer mittleren Dosierung von Reiniger bzw. mit mittlerem Tensidgehalt aufgebracht, das also eine mittlere Oberflächenspannung aufweist, die geringer ist als die bei Fig. 4. Nach einer Zeit von etwa 3 sec ist vom Träger 11 etwas Flüssigkeit abgelaufen, so dass ein relativ großer Feuchtbereich 28c im Messbereich 15 verbleibt. Dieser erstreckt sich vom unteren Endbereich 14 bis fast nach ganz oben und wird dort auch wieder etwas schmaler. Nun ist die kapazitive Kopplung zwischen den Elektroden 20a und 20b im Vergleich zur Fig. 3 deutlich erhöht, was wiederum durch kapazitive Messung erfasst worden ist. Würde die Messdauer von 3 sec auf beispielsweise 5 sec oder sogar 10 sec erhöht so würde wohl noch etwas mehr Flüssigkeit ablaufen, aber dann wäre die Unterscheidbarkeit zur Fig. 3 schwierig, da dort möglicherweise kaum noch Flüssigkeit verbleiben würde.

Gemäß Fig. 6 ist Frischwasser mit einer hohen bzw. maximalen Dosierung von Reiniger bzw. mit hohem Tensidgehalt aufgebracht, das also eine sehr geringe Oberflächenspannung aufweist, die nochmals geringer ist als die bei Fig. 5. Nach einer Zeit von etwa 3 sec ist vom Träger 11 kaum Flüssigkeit abgelaufen, so dass ein sehr großer Feuchtbereich 28d im Messbereich 15 verbleibt, der diesen vollständig bedeckt. Dieser Feuchtbereich 28d kann zwar dünner sein als der bei Fig. 5, aber er ist flächenmäßig größer. Er erstreckt sich vom unteren Endbereich 14 bis nach ganz oben und bedeckt auch die Hydrophob-Bereiche 17 vollständig. Die gemessene kapazitive Kopplung zwischen den Elektroden 20a und 20b ist also maximal.

Bei der Fig. 7 ist Frischwasser ohne Reiniger bzw. ohne Tensidgehalt aufgebracht worden, aber nur in einem einzigen kurzen Schwall, und zwar nachdem zuvor die Flüssigkeit gem. Fig. 6 vorhanden war. Es verbleibt noch etwas Flüssigkeit mit Tensidgehalt, die nicht sofort komplett abgespült bzw. entfernt wird. Es verbleibt im unteren Endbereich 14 ein sehr großer Tropfen 28e auf einem Hydrophil-Bereich 18 und darüber ein sehr kleiner Tropfen. Es ist also relativ viel Flüssigkeit abgelaufen, aber wegen der verbliebenen Tenside ergibt sich noch nicht wieder dasselbe Bild wie bei Fig. 3, was eigentlich erwartbar wäre. Auch diese Menge an Flüssigkeit kann kapazitiv erfasst werden.

in Fig. 8 ist lange bzw. gründlich mit Frischwasser gespült worden, beispielsweise 10 sec oder 20 sec lang. Dann sind sämtliche Spuren von Tensiden entfernt, und es verbleiben ähnlich wie in Fig. 3 nur wenige kleine Tropfen 28f von Frischwasser im unteren Endbereich 14. Die kapazitive Messung erfasst dies, es sollte sich ein Wert ähnlich wie bei Fig. 3 ergeben.

Die Fig. 9 zeigt eine Ausgestaltung eines Trägers 111 mit einer erheblich höheren Anzahl von Hydrophob-Bereichen 117 und Hydrophil-Bereichen 118 in einem Messbereich 115. Sie sind wiederum in einem Muster wie zuvor angeordnet, allerding die doppelte Anzahl jeweils nebeneinander und untereinander. Somit sind viermal so viele Bereiche 117 und 118 vorgesehen.

Oben am Träger 111 sind auf der Trägeroberfläche 113 des Trägersubstrats 112 zwei Anschlusskontakte 125a und 125 b vorgesehen, an die nicht dargestellte Elektroden wie in Fig. 2 geführt sind. Durch die kleinere Ausbildung der jeweiligen Bereiche 117 und 118 kann evtl. eine bessere Unterscheidung der verschiedenen Tensidgehalte erfolgen, weil die jeweils verbleibende Menge an Flüssigkeit evtl. unterschiedlich ist.

In den Fig. 10 und 11 ist der Aufbau einer solchen Vorrichtung 31 wie vorbeschrieben dargestellt. An einem kurzen rohrartigen Halter 33, der nach vorne offen ist zu einem Innenraum 34 hin, und der von hinten verschlossen ist, ist der Träger 11 gehaltert. Er verläuft mit einem Winkel α zur gestrichelten Längsmittelachse des Halters 33, die der Horizontalen entspricht, der hier etwa 55° beträgt. Dieser Winkel α bestimmt die Stärke bzw. Wirkung der Schwerkraft auf die Flüssigkeit, die sich auf der Oberfläche des Trägers 11 befindet, also im Messbereich 15. Je größer der Winkel α ist und somit je steiler der Träger 11 steht, desto leichter und mehr läuft die Flüssigkeit ab. Dieser Effekt wirkt zusätzlich zu dem Verhalten, das vom Tensidgehalt bzw. der Oberflächenspannung der Flüssigkeit abhängt.

In der Fig. 12 ist der Aufbau einer erfindungsgemäßen Spülmaschine 40 als wasserführendes Haushaltsgerät dargestellt, das eine Spülkammer 41 aufweist als Behandlungskammer, in der Geschirr gereinigt wird. Aus einem Sumpf 42 darunter wird mittels einer Pumpe 43 Wasser abgesaugt und durch eine Leitung 44 in einen Sprüharm 45 gepumpt. Von dort aus wird das Wasser als Spülwasser 47 in entsprechenden kleinen Strahlen in die Spülkammer 41 auf das Geschirr aufgesprüht. Das Wasser spritzt dann auch auf die Vorrichtung 31 rechts in der Seitenwand mit dem Träger 11 bzw. auf dessen Messbereich 15. Für den runden Halter 33 kann sehr einfach ein rundes Loch in die Seitenwand gemacht werden, in dem er dann abgedichtet angebracht wird. Der Träger 11 ist mit seinen Anschlusskontakten 25 und einer Anschlussleitung 26 elektrisch kontaktiert und mit einer Steuerung 48 der Spülmaschine 40 verbunden. Diese wertet den Träger bzw. die Elektroden 20a und 20b aus, sowohl die zeitlichen Aspekte als auch die Kapazitätsmessung an den Elektroden. Damit kann die Steuerung 48 dann mit dem vorgenannten Verfahren bestimmen, wie viel Reiniger bzw. Tensid im Spülwasser 47 enthalten ist. So kann eine bessere und ggf. sparsamere Dosierung erfolgen, jedenfalls kann die Dosierung genau angepasst werden. Sie kann also gestoppt werden oder verstärkt werden, wie es eben gebraucht wird.

Wie zuvor erläutert kann eine zusätzliche Erfassung einer Temperatur der Flüssigkeit erfolgen bzw. deren Temperatur berücksichtigt werden. Dies kann passiv erfolgen durch einen entsprechenden Temperatursensor, der entweder am Träger 11 angebracht ist oder irgendwo an der Spülmaschine bzw. deren Wasserführung, beispielsweise an der Pumpe 43 oder einer Beheizung für das Wasser. Der entsprechende Zusammenhang zwischen Temperatur und Abfließverhalten ist ja zuvor dargelegt worden. Er kann sozusagen herausgerechnet werden, oder aber durch entsprechende Beheizung des Trägers 11 kann jeweils eine möglichst gleichbleibende Temperatur für die Messvorgänge erreicht werden. Damit kann ein Einfluss der Temperatur bzw. eine Verfälschung des Messungsvorgangs möglichst reduziert oder ganz vermieden werden.

In der Steuerung 48 kann durch Berechnung oder durch Vergleich mit abgespeicherten Werten dann die Oberflächenspannung im Spülwasser 47 bestimmt werden und dann daraus deren Tensidgehalt. Dies kann die Steuerung 48 nutzen, um die Dosierung von Reiniger in das Spülwasser 47 besser einzustellen.

## Patentansprüche

1. Verfahren zur Untersuchung einer Flüssigkeit (47) in einem wasserführenden Haushaltsgerät (40), wobei eine Oberflächenspannung einer Flüssigkeit (47) erfasst werden soll, mit den Schritten:
- Bereitstellen eines flachen und flächigen Trägers (11), wobei:
- der Träger (11) eine flache und flächige Trägeroberfläche (13, 113) aufweist,
- auf der Trägeroberfläche (13, 113) abwechselnd Hydrophob-Bereiche (17, 117) und Hydrophil-Bereiche (18, 118) vorgesehen sind,
- Aufbringen der zu untersuchenden Flüssigkeit (47) auf die Trägeroberfläche (13, 113),
- danach wird die Flüssigkeit (47) auf der Trägeroberfläche (13, 113) einer Krafteinwirkung ausgesetzt, die derart und dazu ausgebildet ist, die Flüssigkeit (47) von der Trägeroberfläche (13, 113) zumindest teilweise zu entfernen,
- die möglicherweise verbleibende Menge an Flüssigkeit (28) auf der Trägeroberfläche (13, 113) wird erfasst und als Maß für die Oberflächenspannung der untersuchten Flüssigkeit (47) herangezogen, wobei die Oberflächenspannung der Flüssigkeit größer ist, je weniger Flüssigkeit (28) auf der Trägeroberfläche (13, 113) verbleibt.

2. Verfahren nach Anspruch 1, **dadurch gekennzeichnet, dass** die Hydrophob-Bereiche (17, 117) und die Hydrophil-Bereiche (18, 118) ein regelmäßiges Muster in einer Richtung auf der Trägeroberfläche (13, 113) bilden, wobei insbesondere in dieser Richtung die Hydrophob-Bereiche (17, 117) und die Hydrophil-Bereiche (18, 118) gleich groß sind, wobei vorzugsweise die Hydrophob-Bereiche (17, 117) und die Hydrophil-Bereiche (18, 118) ein regelmäßiges Muster auch in einer zweiten Richtung rechtwinklig zu der anderen Richtung bilden, wobei insbesondere in jeder der beiden Richtungen mindestens dreimal ein Wechsel zwischen einem Hydrophob-Bereich (17, 117) und einem Hydrophil-Bereich (18, 118) vorgesehen ist.

3. Verfahren nach Anspruch 1 oder 2, **dadurch gekennzeichnet, dass** alle Hydrophob-Bereiche (17, 117) und/oder alle Hydrophil-Bereiche (18, 118) jeweils gleich groß ausgebildet sind, wobei vorzugsweise alle Hydrophob-Bereiche (17, 117) und/oder alle Hydrophil-Bereiche (18, 118) jeweils identisch ausgebildet sind, wobei vorzugsweise die Hydrophob-Bereiche (17, 117) und die Hydrophil-Bereiche (18, 118) jeweils rechteckig sind, wobei vorzugsweise die Hydrophob-Bereiche (17, 117) und die Hydrophil-Bereiche (18, 118) in den Ecken direkt aneinanderstoßen.

4. Verfahren nach einem der vorhergehenden Ansprüche, **dadurch gekennzeichnet, dass** die Krafteinwirkung eine Richtung aufweist bzw. eine gerichtete Krafteinwirkung ist, wobei vorzugsweise entlang der Richtung der Krafteinwirkung mehr Hydrophob-Bereiche (17, 117) und Hydrophil-Bereiche (18, 118) vorgesehen sind als in einer Richtung rechtwinklig dazu, vorzugsweise zweimal so viele bis zehnmal so viele, wobei insbesondere die Trägeroberfläche (13, 113) in der Richtung entlang der Kraftwirkung länger ist als in der Richtung rechtwinklig dazu, vorzugsweise zweimal bis zehnmal so lang.

5. Verfahren nach Anspruch 4, **dadurch gekennzeichnet, dass** die Hydrophob-Bereiche (17, 117) und/oder die Hydrophil-Bereiche (18, 118) entlang der Richtung der Krafteinwirkung oder der Bewegung der Flüssigkeit (47) beim Entfernen dieselbe Ausdehnung aufweisen wie in einer Richtung rechtwinklig dazu.

6. Verfahren nach einem der vorhergehenden Ansprüche, **dadurch gekennzeichnet, dass** die Trägeroberfläche (13, 113) im Wesentlichen, insbesondere vollständig bis auf einen Anschlußbereich, nur Hydrophob-Bereiche (17, 117) und Hydrophil-Bereiche (18, 118) aufweist, die abwechselnd angeordnet sind.

7. Verfahren nach einem der vorhergehenden Ansprüche, **dadurch gekennzeichnet, dass** die Krafteinwirkung ein Luftstrom ist oder die Schwerkraft ist, wobei vorzugsweise bei der Schwerkraft als Krafteinwirkung der Träger (11) mit der Trägeroberfläche (13, 113) schräggestellt ist in einem Winkel (α) zwischen 10° und 80° zur Horizontalen.

8. Verfahren nach einem der vorhergehenden Ansprüche, **dadurch gekennzeichnet, dass** die verbleibende Menge an Flüssigkeit (28) auf der Trägeroberfläche (13, 113) nach einer bestimmten Zeit erfasst wird, vorzugsweise zwischen 2 sec und 20 sec nach dem Aufbringen der Flüssigkeit (47) oder nach Beginn des Aussetzens der Krafteinwirkung, insbesondere zwischen 5 sec und 10 sec danach.

9. Verfahren nach einem der vorhergehenden Ansprüche, **dadurch gekennzeichnet, dass** die Menge der auf der Trägeroberfläche (13, 113) verbleibenden Flüssigkeit (28) kapazitiv erfasst wird, vorzugsweise durch am Träger (11) angebrachte elektrisch leitfähige Elektroden (20) mit einer Messung der Kapazität bzw. einer kapazitiven Kopplung zwischen den beiden Elektroden, wobei die beiden Elektroden (20) derart angeordnet sind, dass die Kapazität bzw. die kapazitive Kopplung zwischen den beiden Elektroden von der Menge an Flüssigkeit (28) auf der Trägeroberfläche (13, 113) abhängt bzw. in einem bestimmten Verhältnis dazu steht, wobei insbesondere die Elektroden (20) fingerartig (23) ausgebildet sind und von einer Längsseite zur gegenüberliegenden verlaufen, so dass sie ineinander verschränkt sind.

10. Verfahren nach einem der Ansprüche 1 bis 8, **dadurch gekennzeichnet, dass** die Menge der auf der Trägeroberfläche verbleibenden Flüssigkeit (28) optisch erfasst wird, vorzugsweise mittels einer Transmissions-Messung, einer Messung der Lichtbrechung oder einer Messung der Reflexion.

11. Verfahren nach einem der vorhergehenden Ansprüche, **dadurch gekennzeichnet, dass** der Träger (11) beheizbar ist, vorzugsweise mittels einer an der von der Trägeroberfläche (13, 113) abgewandten Seite des Trägers (11) angebrachten Heizeinrichtung, wobei eine Bestimmung der Oberflächenspannung der Flüssigkeit (47) in Abhängigkeit von bestimmten unterschiedlichen Temperaturen erfolgt.

12. Verfahren nach einem der vorhergehenden Ansprüche, **dadurch gekennzeichnet, dass** eine Temperatur des Trägers (11) und/oder der Flüssigkeit (28) auf dem Träger (11) bestimmt wird zur temperaturabhängigen Erfassung der Oberflächenspannung der Flüssigkeit (47), wobei vorzugsweise ein Temperatursensor direkt auf dem Träger (11) aufgebracht ist, insbesondere zwischen den Hydrophob-Bereichen (17, 117) und den Hydrophil-Bereichen (18, 118).

13. Verfahren nach einem der vorhergehenden Ansprüche, **dadurch gekennzeichnet, dass** sich die Hydrophob-Bereiche (17, 117) und die Hydrophil-Bereiche (18, 118) durch das Material ihrer Oberfläche unterscheiden, wobei vorzugsweise die Hydrophob-Bereiche (17, 117) eine Beschichtung aufweisen ausgewählt aus der Gruppe Parylen, PTFE oder Nano-Beschichtung mit Lotoseffekt, wobei insbesondere die Oberfläche der Hydrophob-Bereiche (17, 117) durch eine Kunststoffbedampfung oder durch eine DLC-Beschichtung gebildet ist.

14. Verfahren nach einem der Ansprüche 1 bis 12, **dadurch gekennzeichnet, dass** sich die Hydrophob-Bereiche (17, 117) und die Hydrophil-Bereiche (18, 118) hinsichtlich einer Oberflächenstruktur voneinander unterscheiden, wobei vorzugsweise die Hydrophil-Bereiche (18, 118) eine größere Oberflächenrauheit aufweisen als die Hydrophob-Bereiche (17, 117), wobei insbesondere eine unterschiedliche Oberflächenrauheit zwischen Hydrophob-Bereichen (17, 117) und Hydrophil-Bereichen (18, 118) durch eine partielle Oberflächenstrukturierung hergestellt wird, vorzugsweise ausgewählt aus der Gruppe Siebdruck, partielles Sandstrahlen, maskiertes Sandstrahlen, maskiertes Ätzen oder Lasern.

15. Wasserführendes Haushaltsgerät (40) zur Durchführung des Verfahrens nach einem der vorhergehenden Ansprüche, **dadurch gekennzeichnet, dass**:
- das wasserführende Haushaltsgerät (40) einen Träger (11) aufweist mit einer flachen und flächigen Trägeroberfläche (13, 113), die Hydrophob-Bereiche (17, 117) und Hydrophil-Bereiche (18, 118) aufweist,
- auf der Trägeroberfläche (13, 113) abwechselnd Hydrophob-Bereiche (17, 117) und Hydrophil-Bereiche (18, 118) vorgesehen sind,
- Mittel (45) vorgesehen sind zum Aufbringen einer zu untersuchenden Flüssigkeit (47) auf die Trägeroberfläche (13, 113),
- Erfassungsmittel (48) vorgesehen sind zum Erfassen, ob und ggf. wieviel Flüssigkeit (47) auf der Trägeroberfläche (13, 113) verbleibt.

## Claims

1. A method of testing a liquid (47) in a water-conducting domestic appliance (40), wherein a surface tension of a liquid (47) is to be detected, comprising the steps of:
- providing a flat and planar carrier (11), wherein:
- said carrier (11) having a flat and planar carrier surface (13, 113),
- alternating hydrophobic regions (17, 117) and hydrophilic regions (18, 118) are provided on the carrier surface (13, 113),
- applying the liquid (47) to be tested to the carrier surface (13, 113),
- thereafter subjecting the liquid (47) on the carrier surface (13, 113) to a force such and adapted to at least partially remove the liquid (47) from the carrier surface (13, 113),
- the possibly remaining amount of liquid (28) on the carrier surface (13, 113) is detected and used as a measure of the surface tension of the liquid (47) under investigation, the surface tension of the liquid being greater the less liquid (28) remains on the carrier surface (13, 113).

2. Method according to claim 1, **characterized in that** the hydrophobic regions (17, 117) and the hydrophilic regions (18, 118) form a regular pattern in one direction on the carrier surface (13, 113), in particular in which direction the hydrophobic regions (17, 117) and the hydrophilic regions (18, 118) are of equal size, preferably the hydrophobic regions (17, 117) and the hydrophilic regions (18, 118) forming a regular pattern also in a second direction perpendicular to the other direction, in particular in each of the two directions at least three changes being provided between a hydrophobic region (17, 117) and a hydrophilic region (18, 118).

3. Method according to claim 1 or 2, **characterized in that** all hydrophobic regions (17, 117) and/or all hydrophilic regions (18, 118) have the same size, preferably all hydrophobic regions (17, 117) and/or all hydrophilic regions (18, 118) are formed to be identical, wherein preferably the hydrophobic regions (17, 117) and the hydrophilic regions (18, 118) are rectangular, wherein preferably the hydrophobic regions (17, 117) and the hydrophilic regions (18, 118) are abutting directly against one another in the corners.

4. Method according to any one of the preceding claims, **characterized in that** the force has a direction or is a directional force, respectively, wherein preferably along the direction of the force more hydrophobic regions (17, 117) and hydrophilic regions (18, 118) are provided than in a direction perpendicular thereto, preferably twice as many to ten times as many, wherein in particular the carrier surface (13, 113) is longer in the direction along the force than in the direction perpendicular thereto, preferably twice to ten times as long.

5. Method according to claim 4, **characterized in that** the hydrophobic regions (17, 117) and/or the hydrophilic regions (18, 118) have the same extension along the direction of the force or the movement of the liquid (47) during removal as in a direction perpendicular thereto.

6. Method according to any one of the preceding claims, **characterized in that** the carrier surface (13, 113) has essentially, in particular completely except for a connection region, only hydrophobic regions (17, 117) and hydrophilic regions (18, 118) which are arranged alternately.

7. Method according to any one of the preceding claims, **characterized in that** the force is an air flow or is gravity, wherein preferably with gravity as the force the carrier (11) with the carrier surface (13, 113) is inclined at an angle (α) between 10° and 80° to the horizontal.

8. Method according to any one of the preceding claims, **characterized in that** the remaining amount of liquid (28) on the carrier surface (13, 113) is detected after a certain time, preferably between 2 sec and 20 sec after the application of the liquid (47) or after the beginning of the suspension of the application of force, in particular between 5 sec and 10 sec thereafter.

9. Method according to any one of the preceding claims, **characterized in that** the amount of liquid (28) remaining on the carrier surface (13, 113) is detected capacitively, preferably by electrically conductive electrodes (20) attached to the carrier (11) with a measurement of the capacitance or capacitive coupling between the two electrodes, the two electrodes (20) being arranged in such a way that the capacitance or capacitive coupling between the two electrodes depends on or has a predetermined relationship to the amount of liquid (28) on the carrier surface (13, 113), in particular the electrodes (20) being arranged in such a way that the capacitance or capacitive coupling between the two electrodes depends on or has a predetermined relationship to the amount of liquid (28) on the carrier surface (13, 113). the capacitive coupling between the two electrodes depends on the amount of liquid (28) on the carrier surface (13, 113) or is in a predetermined relationship thereto, wherein in particular the electrodes (20) are finger-like (23) and extend from one longitudinal side to the opposite one so that they are interlocked with one another.

10. Method according to any one of claims 1 to 8, **characterized in that** the amount of liquid (28) remaining on the carrier surface is detected optically, preferably by means of a transmission measurement, a refraction measurement or a reflection measurement.

11. Method according to any one of the preceding claims, **characterized in that** the carrier (11) can be heated, preferably by means of a heating device attached to the side of the carrier (11) facing away from the carrier surface (13, 113), the surface tension of the liquid (47) being determined as a function of certain different temperatures.

12. Method according to any one of the preceding claims, **characterized in that** a temperature of the carrier (11) and/or of the liquid (28) on the carrier (11) is determined for temperature-dependent detection of the surface tension of the liquid (47), preferably a temperature sensor being applied directly to the carrier (11), in particular between the hydrophobic regions (17, 117) and the hydrophilic regions (18, 118).

13. Method according to any one of the preceding claims, **characterized in that** the hydrophobic regions (17, 117) and the hydrophilic regions (18, 118) are distinguished by the material of their surface, preferably the hydrophobic regions (17, 117) having a coating selected from the group consisting of parylene, PTFE or nano-coating with lotus effect, in particular the surface of the hydrophobic regions (17, 117) being formed by plastic vapour deposition or by a DLC coating.

14. Method according to any one of claims 1 to 12, **characterized in that** the hydrophobic regions (17, 117) and the hydrophilic regions (18, 118) differ from one another with regard to a surface structure, the hydrophilic regions (18, 118) preferably having a greater surface roughness than the hydrophobic regions (17, 117), 117), wherein in particular a different surface roughness between hydrophobic regions (17, 117) and hydrophilic regions (18, 118) is produced by a partial surface structuring, preferably selected from the group screen printing, partial sandblasting, masked sandblasting, masked etching or lasering.

15. Water-conducting domestic appliance (40) for carrying out the method according to any one of the preceding claims, **characterized in that**:
- the water-carrying domestic appliance (40) has a carrier (11) with a flat and planar carrier surface (13, 113) which has hydrophobic regions (17, 117) and hydrophilic regions (18, 118),
- alternating hydrophobic regions (17, 117) and hydrophilic regions (18, 118) are provided on the carrier surface (13, 113),
- means (45) are provided for applying a liquid (47) to be tested to the carrier surface (13, 113),
- detection means (48) are provided for detecting whether and, if so, how much liquid (47) remains on the carrier surface (13, 113).

## Revendications

1. Procédé pour tester un liquide (47) dans un appareil domestique (40) conduisant l'eau, dans lequel une tension de surface d'un liquide (47) doit être détectée, comprenant les étapes consistant à:
- fournir un support (11) plat et plan, dans lequel :
- ledit support (11) a une surface de support plate et plane (13, 113),
- des régions hydrophobes (17, 117) et des régions hydrophiles (18, 118) alternées sont prévues sur la surface de support (13, 113),
- appliquer le liquide (47) à tester sur la surface de support (13, 113),
- ensuite, soumettre le liquide (47) sur la surface de support (13, 113) à une force telle et adaptée pour enlever au moins partiellement le liquide (47) de la surface de support (13, 113),
- la quantité de liquide (28) restant éventuellement sur la surface de support (13, 113) est détectée et utilisée comme une mesure de la tension superficielle du liquide (47) en cours d'examen, la tension superficielle du liquide étant plus grande plus la quantité de liquide (28) restant sur la surface de support (13, 113) est réduite.

2. Procédé selon la revendication 1, **caractérisé en ce que** les régions hydrophobes (17, 117) et les régions hydrophiles (18, 118) forment un motif régulier dans une direction sur la surface du support (13, 113), en particulier dans laquelle direction les régions hydrophobes (17, 117) et les régions hydrophiles (18, 118) sont de taille égale, de préférence, les régions hydrophobes (17, 117) et les régions hydrophiles (18, 118) forment un motif régulier également dans une deuxième direction perpendiculaire à l'autre direction, en particulier dans chacune des deux directions, au moins trois changements étant prévus entre une région hydrophobe (17, 117) et une région hydrophile (18, 118).

3. Procédé selon la revendication 1 ou 2, **caractérisé en ce que** toutes les régions hydrophobes (17, 117) et/ou toutes les régions hydrophiles (18, 118) ont la même taille, de préférence toutes les régions hydrophobes (17, 117) et/ou toutes les régions hydrophiles (18, 118) sont identiques, les régions hydrophobes (17, 117) et les régions hydrophiles (18, 118) étant de préférence rectangulaires, les régions hydrophobes (17, 117) et les régions hydrophiles (18, 118) étant de préférence en contact direct les unes avec les autres dans les coins.

4. Procédé selon l'une quelconque des revendications précédentes, **caractérisé en ce que** la force a une direction ou est une force directionnelle, respectivement, dans lequel de préférence le long de la direction de la force, plus de régions hydrophobes (17, 117) et de régions hydrophiles (18, 118) sont prévues que dans une direction perpendiculaire à celle-ci, de préférence deux fois plus à dix fois plus, dans lequel en particulier la surface de support (13, 113) est plus longue dans la direction le long de la force que dans la direction perpendiculaire à celle-ci, de préférence deux fois à dix fois plus longue.

5. Procédé selon la revendication 4, **caractérisé en ce que** les régions hydrophobes (17, 117) et/ou les régions hydrophiles (18, 118) ont la même extension dans la direction de la force ou du mouvement du liquide (47) pendant l'enlèvement que dans une direction perpendiculaire à celle-ci.

6. Procédé selon l'une quelconque des revendications précédentes, **caractérisé en ce que** la surface de support (13, 113) ne présente essentiellement, en particulier complètement à l'exception d'une zone de raccordement, que des régions hydrophobes (17, 117) et des régions hydrophiles (18, 118) qui sont disposées en alternance.

7. Procédé selon l'une quelconque des revendications précédentes, **caractérisé en ce que** la force est un écoulement d'air ou la gravité, dans lequel, de préférence avec la gravité comme force, le support (11) avec la surface de support (13, 113) est incliné selon un angle (α) compris entre 10° et 80° par rapport à l'horizontale.

8. Procédé selon l'une quelconque des revendications précédentes, **caractérisé en ce que** la quantité restante de liquide (28) sur la surface de support (13, 113) est détectée après un certain temps, de préférence entre 2 sec et 20 sec après l'application du liquide (47) ou après le début de la suspension de l'application de la force, en particulier entre 5 sec et 10 sec ensuite.

9. Procédé selon l'une quelconque des revendications précédentes, **caractérisé en ce que** la quantité de liquide (28) restant sur la surface du support (13, 113) est détectée de manière capacitive, de préférence par des électrodes électriquement conductrices (20) fixées sur le support (11) avec une mesure de la capacité ou du couplage capacitif entre les deux électrodes, les deux électrodes (20) étant disposées de telle sorte que la capacité ou le couplage capacitif entre les deux électrodes dépende de la quantité de liquide (28) sur la surface du support (13, 113) ou ait une relation prédéterminée avec celle-ci, en particulier les électrodes (20) étant disposées de telle sorte que la capacité ou le couplage capacitif entre les deux électrodes dépende de la quantité de liquide (28) sur la surface du support (13, 113) ou ait une relation prédéterminée avec celle-ci. le couplage capacitif entre les deux électrodes dépend de la quantité de liquide (28) sur la surface de support (13, 113) ou est en relation prédéterminée avec celle-ci, dans lequel en particulier les électrodes (20) sont en forme de doigts (23) et s'étendent d'un côté longitudinal à l'opposé de sorte qu'elles sont emboîtées l'une dans l'autre.

10. Procédé selon l'une quelconque des revendications 1 à 8, **caractérisé en ce que** la quantité de liquide (28) restant sur la surface du support est détectée optiquement, de préférence au moyen d'une mesure de transmission, d'une mesure de réfraction ou d'une mesure de réflexion.

11. Procédé selon l'une quelconque des revendications précédentes, **caractérisé en ce que** le support (11) peut être chauffé, de préférence au moyen d'un dispositif de chauffage fixé sur le côté du support (11) opposé à la surface du support (13, 113), la tension superficielle du liquide (47) étant déterminée en fonction de certaines températures différentes.

12. Procédé selon l'une quelconque des revendications précédentes, **caractérisé en ce qu'**une température du support (11) et/ou du liquide (28) sur le support (11) est déterminée pour la détection en fonction de la température de la tension superficielle du liquide (47), un capteur de température étant de préférence appliqué directement sur le support (11), en particulier entre les régions hydrophobes (17, 117) et les régions hydrophiles (18, 118).

13. Procédé selon l'une quelconque des revendications précédentes, **caractérisé en ce que** les régions hydrophobes (17, 117) et les régions hydrophiles (18, 118) se distinguent par le matériau de leur surface, les régions hydrophobes (17, 117) présentant de préférence un revêtement choisi dans le groupe constitué par le parylène, le PTFE ou un nano-revêtement à effet lotus, en particulier la surface des régions hydrophobes (17, 117) étant formée par dépôt de vapeur de plastique ou par un revêtement DLC.

14. Procédé selon l'une quelconque des revendications 1 à 12, **caractérisé en ce que** les régions hydrophobes (17, 117) et les régions hydrophiles (18, 118) se distinguent les unes des autres par une structure de surface, les régions hydrophiles (18, 118) présentant de préférence une rugosité de surface supérieure à celle des régions hydrophobes (17, 117), 117), où en particulier une rugosité de surface différente entre les régions hydrophobes (17, 117) et les régions hydrophiles (18, 118) est produite par une structuration partielle de la surface, de préférence choisie dans le groupe sérigraphie, sablage partiel, sablage masqué, gravure masquée ou laser.

15. Appareil domestique (40) conduisant l'eau pour la mise en oeuvre du procédé selon l'une quelconque des revendications précédentes, **caractérisé en ce que**:
- l'appareil domestique (40) transportant de l'eau présente un support (11) avec une surface de support plate et plane (13, 113) qui présente des régions hydrophobes (17, 117) et des régions hydrophiles (18, 118),
- des régions hydrophobes (17, 117) et des régions hydrophiles (18, 118) alternées sont prévues sur la surface de support (13, 113),
- des moyens (45) sont prévus pour appliquer un liquide (47) à tester sur la surface de support (13, 113),
- des moyens de détection (48) sont prévus pour détecter si et, le cas échéant, quelle quantité de liquide (47) reste sur la surface de support (13, 113).
